(19) Europäisches Patentamt / European Patent Office / Office européen des brevets

(11) **EP 3 134 476 B1**

(12) **FASCICULE DE BREVET EUROPEEN**

(45) Date de publication et mention
de la délivrance du brevet:
**23.06.2021 Bulletin 2021/25**

(21) Numéro de dépôt: **15714572.3**

(22) Date de dépôt: **05.03.2015**

(51) Int Cl.:
***C08L 77/12*** *(2006.01)*      ***C09J 177/12*** *(2006.01)*
***A41H 43/04*** *(2006.01)*

(86) Numéro de dépôt international:
**PCT/FR2015/050536**

(87) Numéro de publication internationale:
**WO 2015/140441 (24.09.2015 Gazette 2015/38)**

(54) **COMPOSITION DE COPOLYAMIDE A MAIN SOUPLE**

COPOLYAMIDZUSAMMENSETZUNG MIT WEICHEM TOUCH

SOFT-FEELING COPOLYAMIDE COMPOSITION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.03.2014 FR 1452170**

(43) Date de publication de la demande:
**01.03.2017 Bulletin 2017/09**

(73) Titulaire: **Arkema France
92700 Colombes (FR)**

(72) Inventeurs:
• **PINEAU, Quentin**
  **F-27000 Evreux (FR)**
• **D'HERBECOURT, Bruno**
  **F-27300 Bernay (FR)**

(56) Documents cités:
**EP-A2- 0 095 893      WO-A1-2004/037898
FR-A1- 2 418 250      FR-A1- 2 497 518
JP-B2- 3 181 374      US-A- 4 459 389**

**Description**

La présente invention concerne une composition de copolyamides pour la fabrication d'un adhésif thermosensible, en particulier un voile, un film, des granulés, un filament, une grille, une poudre ou une suspension.

Elle concerne également lesdits adhésifs thermosensibles et leur utilisation dans l'industrie textile, notamment pour la fabrication d'articles de sport sans couture.

Les coutures présentes dans les vêtements, notamment dans les bas et les collants présentent les inconvénients d'être inesthétiques et de représenter une gêne au toucher, notamment au niveau du pied.

Par ailleurs, les vêtements de sport, notamment de sport d'hiver, sont utilisés dans des conditions de froid parfois extrêmes et présentent l'inconvénient au niveau des coutures de fragiliser le vêtement en le rendant perméable à l'eau et sensible à la cassure au niveau de ladite couture.

Cet inconvénient est jusqu'à présent résolu par l'emploi de thermoplastiques polyuréthanes (TPU) qui sont utilisés notamment dans l'industrie textile en tant qu'adhésifs thermosensibles pour supprimer les coutures et qui possèdent notamment des propriétés de flexibilité ou souplesse.

Néanmoins, ils présentent le défaut de ne pas résister au lavage, en particulier en machine, notamment au-delà de 60°C, d'être difficile à mettre en œuvre et de jaunir avec le temps, ce qui pour l'esthétique du vêtement est préjudiciable.

Par ailleurs, la flexibilité peut aussi être apportée par des polyamides à base de dimères d'acides gras tels que décrits dans le brevet US 3,377,303, cependant, ils ne sont pas résistants au lavage, en particulier en machine.

S'agissant des copolyamides traditionnels, ils sont connus pour être résistants au lavage jusqu'à 90°C, pour ne pas jaunir avec le temps et pour être aisés à mettre en œuvre, cependant ils ont un manque de flexibilité ou sont trop rigides. Les PEBA, tels que décrits par exemple dans les documents FR 99/05430 ou FR 05/03713, sont également des copolymères, et notamment des copolyamides à motifs amides et à motifs polyéthers, mais qui sont dépourvus de propriétés thermo-adhésives.

Le document FR 2 497 518 A1 décrit un adhésif thermofusible formé du produit de la copolycondensation de séquences polyamides à extrémités réactives avec des séquences polyéthers à extrémités réactives.

Le document US 4 459 389 A décrit un PEBA avec un point de fusion de 120°C issu de la polymérisation de caprolactame, laurolactame et de PTMG, la proportion massique de polyéther dans le PEBA étant de 50%.

Il existe donc un besoin d'adhésifs thermosensibles possédant à la fois des propriétés :

- de flexibilité ou souplesse,
- de résistance au lavage,
- de facilité de mise en œuvre,

qui ne jaunissent pas avec le temps et présentent donc un esthétisme amélioré et qui enfin possèdent des propriétés de résistance et flexibilité dans le froid.

La demanderesse a résolu les différents problèmes de l'art antérieur par la fourniture d'une composition comprenant un copolyamide à motifs amides et à motifs polyéthers, ayant une température de fusion (Tf) comprise d'environ 90 à environ 150, en particulier de 100 à 125°C et présentant un module de flexion inférieur à 100 MPa, tel que déterminé selon la norme ISO 178 (2010).

Dans la description, Tf ou Tm sont indifféremment employés et désignent la même chose.

La présente invention divulgue une composition comprenant en poids, le total étant égal à 100 % :

- de 98 à 100% d'au moins un copolyamide à motifs amides et à motifs polyéthers, ayant une température de fusion (Tf) comprise d'environ 90 à environ 150°C, en particulier d'environ 100°C à environ 125°C, et présentant un module de flexion inférieur à 100 MPa, tel que déterminé selon la norme ISO 178 (2010);

  • ledit motif amide ayant la structure suivante :

$$(A)_x \, / \, (B)_y \, / \, (C)$$

résultant de la condensation du motif (A), du motif (B) et du motif (C), dans laquelle :

x = 0 ou 1, y = 0 ou 1 et x+y = 1 ou 2,
A et B correspondant à un motif répétitif aliphatique choisi parmi un motif obtenu à partir d'au moins un aminoacide et un motif obtenu à partir d'au moins un lactame, ou un motif X.Y obtenu à partir de la polycondensation :

- d'au moins une diamine, ladite diamine étant choisie parmi une diamine aliphatique linéaire ou ramifiée, une diamine cycloaliphatique et une diamine aromatique ou un mélange de ceux-ci, et
- d'au moins un diacide carboxylique, ledit diacide étant choisi parmi :

un diacide aliphatique, un diacide cycloaliphatique et un diacide aromatique, ladite diamine et ledit diacide comprenant de 4 à 36 atomes de carbone, avantageusement de 6 à 18 atomes de carbone ;

(C) représente un motif répétitif aliphatique à longue chaîne, obtenu à partir d'un aminoacide, d'un lactame, ou d'un motif X.Y, en C10 ou plus, notamment en C11 et C12, ou d'un mélange de ceux-ci, et (A) et (B) étant différents l'un de l'autre lorsqu'ils sont présents tous les deux, et (A et B) étant différents de (C) lorsqu'ils sont présents seuls ou ensemble,

• lesdits motifs polyéthers étant notamment issus d'au moins un polyalkylène éther polyol ou un polyalkylène éther polyamine, notamment un polyalkylène éther diol ou un polyalkylène éther diamine, sous réserve que lorsque le polyalkylène éther diol est un polyéthylène glycol, il est associé à au moins un autre polyalkylène éther polyol ou polyalkylène éther polyamine,

la proportion en poids de motifs polyéthers dans le copolyamide étant supérieure à 40%, en particulier comprise de 50 à 80%, notamment d'environ 50%,
- de 0 à 2% d'au moins un additif choisi parmi les stabilisants et les colorants, ou un mélange de ceux-ci,
pour la fabrication d'un adhésif thermosensible, en particulier un voile, un film, des granulés, un filament, une grille, une poudre ou une suspension. Cependant, la présente invention concerne une composition comprenant en poids, le total étant égal à 100 % :
- de 98 à 100% d'au moins un copolyamide à motifs amides et à motifs polyéthers, ayant une température de fusion (Tf) comprise de 100°C à 125°C et présentant un module de flexion inférieur à 100 MPa, tel que déterminé selon la norme ISO 178 (2010);

• lesdits motifs amide étant 6/12, la proportion en poids de chaque constituant du motif amide 6/12 étant de 25/75 ou 30/70 ;
• lesdits motifs polyéthers étant issus d'au moins un PTMG, la proportion en poids de motifs polyéthers dans le copolyamide étant de 50%,

- de 0 à 2% d'au moins un additif choisi parmi les stabilisants et les colorants, ou un mélange de ceux-ci,

pour la fabrication d'un adhésif thermosensible.
Par polyamide (homopolyamide ou copolyamide) au sens de l'invention on entend les produits de condensation des lactames, des aminoacides et/ou des diacides avec les diamines.

## S'agissant du motif amide :

Il résulte de la condensation du motif (A), du motif (B) et du motif (C).
(A) et (B) correspondent à un motif répétitif aliphatique qui peut être obtenu à partir d'un acide aminocarboxylique (encore dénommé aminoacide), d'un lactame ou d'un motif répondant à la formule X.Y, X étant une diamine en Ca et Y étant un diacide en Cb, également dénommé (diamine en Ca).(diacide en Cb), avec a représentant le nombre d'atomes de carbone de la diamine et b représentant le nombre d'atomes de carbone du diacide, a et b étant chacun allant de 4 à 36, avantageusement de 6 à 18 atomes de carbone.
Lorsque le motif répétitif aliphatique est obtenu à partir d'un motif dérivé d'un aminoacide, il peut être choisi parmi l'acide 9-aminononanoïque, l'acide 10-aminodécanoïque, l'acide 10-aminoundécanoïque, l'acide 11-aminoundécanoïque et l'acide 12-aminododécanoïque, ainsi que ses dérivés, notamment l'acide N-heptyl-11-aminoundécanoïque.
Lorsque le motif répétitif aliphatique est obtenu à partir d'un motif dérivé d'un lactame, il peut être choisi parmi la pyrrolidinone, la 2-pipéridinone, le caprolactame, l'énantholactame, le caprylolactame, le pelargolactame, le décanolactame, l'undecanolactame, et le lauryllactame.
Lorsque le motif répétitif aliphatique est obtenu à partir d'un motif dérivé d'un motif répondant à la formule (diamine en Ca).(diacide en Cb), le motif (diamine en Ca) est choisi parmi les diamines aliphatiques, linéaires ou ramifiées, les diamines cycloaliphatiques et les diamines alkylaromatiques.
Lorsque la diamine est aliphatique et linéaire, de formule $H_2N$-$(CH_2)_a$-$NH_2$, le monomère (diamine en Ca) est préférentiellement choisi parmi la butanediamine (a=4), la pentanediamine (a=5), la hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tétradécanediamine (a=14), l'hexadécanediamine (a=16), l'octadécanediamine (a=18), l'octadécènediamine (a=18), l'eicosanediamine (a=20), la docosanediamine (a=22) et les diamines obtenues à partir d'acides gras.

Lorsque la diamine est aliphatique et ramifiée, elle peut comporter un ou plusieurs substituants méthyle ou éthyle sur la chaîne principale. Par exemple, le monomère (diamine en Ca) peut avantageusement être choisi parmi la 2,2,4-triméthyl-1,6-hexanediamine, la 2,4,4-triméthyl-1,6-hexanediamine, le 1,3-diaminopentane, la 2-méthyl-1,5-pentanediamine, la 2-méthyl-1,8-octanediamine.

Lorsque le monomère (diamine en Ca) est cycloaliphatique, il est préférentiellement choisi parmi la pipérazine, une aminoalkylpipérazine, la bis(3,5-dialkyl-4-aminocyclohexyl)méthane, la bis(3,5-dialkyl-4-aminocyclohexyl)éthane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-méthane (PACM) et l'isopropylidènedi(cyclohexylamine) (PACP). Il peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque le monomère (diamine en Ca) est alkylaromatique, il est préférentiellement choisi parmi la 1,3-xylylène diamine et la 1,4-xylylène diamine.

Lorsque le motif répétitif est un motif répondant à la formule (diamine en Ca).(diacide en Cb), le motif (diacide en Cb) est choisi parmi les diacides aliphatiques, linéaires ou ramifiés, les diacides cycloaliphatiques et les diacides aromatiques.

Lorsque le monomère (diacide en Cb) est aliphatique et linéaire, il est préférentiellement choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanedioïque (b=18), l'acide octadécènedioïque (b=18), l'acide eicosanedioïque (b=20), l'acide docosanedioïque (b=22).

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.

Lorsque le diacide est aromatique, il est préférentiellement choisi parmi l'acide téréphtalique (noté T), isophtalique (noté I) et les diacides naphtaléniques, en particulier isophtalique.

Chaque motif répétitif aliphatique (A) et (B) forment un polyamide.

Les polyamides (A) et (B) sont différents l'un de l'autre si (A) et (B) sont présents en même temps dans le copolyamide à motifs amides et à motifs polyéthers.

Cependant, au moins un polyamide employé dans les compositions de l'invention est un copolyamide à motifs amides et à motifs polyéthers, ayant une température de fusion (Tf) comprise de 100°C à 125°C et présentant un module de flexion inférieur à 100 MPa, tel que déterminé selon la norme ISO 178 (2010);

- lesdits motifs amide étant 6/12, la proportion en poids de chaque constituant du motif amide 6/12 étant de 25/75 ou 30/70 ;
- lesdits motifs polyéthers étant issus d'au moins un PTMG, la proportion en poids de motifs polyéthers dans le copolyamide étant de 50%.

**S'agissant du motif polyéther** :

Le motif polyéther peut correspondre à des séquences polyéthers à extrémités réactives, telles que, entre autres :

1) des séquences polyoxyalkylènes à bouts de chaînes dicarboxyliques.

2) des séquences polyoxyalkylènes à bouts de chaînes diamines obtenues par cyanoéthylation et hydrogénation de séquences polyoxyalkylène alpha-oméga dihydroxylées aliphatiques appelées polyalkylène éther diols (polyétherdiols).

3) des polyoxyalkylène éther polyol (ou polyalkylène éther polyol), notamment un polyalkylène éther diol, encore dénommé polyétherdiols.

Le copolyamide à motifs amides et motifs polyéthers peut donc correspondre aux produits de condensation :

1) de séquences polyamides à bouts de chaîne diamines avec des séquences polyoxyalkylènes à bouts de chaînes dicarboxyliques,

2) de séquences polyamides à bouts de chaînes dicarboxyliques avec des séquences polyoxyalkylènes à bouts de chaînes diamines (ou polyalkylène éther polyamine) ci-dessus définies,

3) de séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent par exemple de la condensation de précurseurs de polyamides en présence d'un diacide carboxylique limiteur de chaîne.

Les séquences polyamides à bouts de chaînes diamines proviennent par exemple de la condensation de précurseurs de polyamides en présence d'une diamine limiteur de chaîne.

Les polymères à blocs polyamides et blocs polyéthers peuvent aussi comprendre des motifs répartis de façon aléatoire. Ces polymères peuvent être préparés par la réaction simultanée du motif polyéther et des précurseurs du(des) motif(s) amide(s).

Par exemple, on peut faire réagir du polyétherdiol, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

On peut aussi faire réagir du polyétherdiamine, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

Le copolyamide à motifs amides et à motifs polyéthers peut être préparé par le procédé suivant lequel :

- dans une première étape, on prépare les motifs amides par polycondensation :

  ∘ de la ou des diamines ;
  ∘ du ou des diacides carboxyliques ; et

  le cas échéant, du ou des comonomères choisis parmi les lactames et les acides alpha-oméga aminocarboxyliques ;
  ∘ en présence d'un limiteur de chaîne choisi parmi les diacides carboxyliques ; puis
- dans une seconde étape, on fait réagir les motifs amides obtenus avec des motifs polyéther, en présence d'un catalyseur.

La méthode générale de préparation en deux étapes des copolymères de l'invention est connue et est décrite, par exemple, dans le brevet français FR 2 846 332 et dans le brevet européen EP 1 482 011.

La réaction de formation des motifs amides se fait habituellement entre 180 et 300°C, de préférence de 200 à 290°C, la pression dans le réacteur s'établit entre 5 et 30 bars, et on la maintient environ 2 à 3 heures. On réduit lentement la pression en mettant le réacteur à la pression atmosphérique, puis on distille l'eau excédentaire par exemple pendant une heure ou deux.

Le polyamide à extrémités acide carboxylique ayant été préparé, on ajoute ensuite le polyéther et un catalyseur. On peut ajouter le polyéther en une ou plusieurs fois, de même pour le catalyseur. Selon une forme avantageuse, on ajoute d'abord le polyéther, la réaction des extrémités OH du polyéther et des extrémités COOH du polyamide commence avec formation de liaisons ester et élimination d'eau. On élimine le plus possible l'eau du milieu réactionnel par distillation, puis on introduit le catalyseur pour achever la liaison des blocs polyamides et des blocs polyéthers. Cette deuxième étape s'effectue sous agitation, de préférence sous un vide d'au moins 15 mm Hg (2000 Pa) à une température telle que les réactifs et les copolymères obtenus soient à l'état fondu. A titre d'exemple, cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible.

On pourra également ajouter pendant la synthèse, au moment jugé le plus opportun, une ou plusieurs molécules utilisées comme anti-oxydant, par exemple l'Irganox® 1010 ou l'Irganox® 245.

On peut aussi considérer le procédé de préparation du copolyamide tel que l'on ajoute tous les monomères au début, soit en une seule étape, pour effectuer la polycondensation :

- de la ou des diamines ;

- du ou des diacides carboxyliques ; et
- le cas échéant, de l'autre ou des autres comonomères de polyamide ;
- en présence d'un limiteur de chaîne choisi parmi les diacides carboxyliques ;
- en présence des motifs polyéthers ;
- en présence d'un catalyseur pour la réaction entre les motifs amides et les motifs amides.

Avantageusement, on utilise comme limiteur de chaîne ledit diacide carboxylique, que l'on introduit en excès par rapport à la stœchiométrie de la ou des diamines.

Avantageusement, on utilise comme catalyseur, un dérivé d'un métal choisi dans le groupe formé par le titane, le zirconium et l'hafnium ou un acide fort tel que l'acide phosphorique, l'acide hypophosphoreux ou l'acide borique.

On peut conduire la polycondensation à une température de 240 à 280°C.

Le motif polyéther peut être utilisé seul, auquel cas, il ne peut correspondre à du PEG, ou en mélange avec un ou plusieurs autres polyéthers, dans ce dernier cas, le PEG peut alors être utilisé.

Avantageusement, le motif polyéther est hydrophobe.

Les motifs polyéthers du copolyamide selon la présente invention sont issus d'au moins un PTMG.

### S'agissant des additifs :

Les additifs sont choisis parmi les stabilisants et les colorants.

A titre d'exemple, le stabilisant peut être un stabilisant UV, un stabilisant organique ou plus généralement une combinaison de stabilisants organiques, tel un antioxydant de type phénol (par exemple du type de celle de l'irganox® 245 ou 1098 ou 1010 de la société Ciba-BASF), un antioxydant de type phosphite (par exemple l'irgaphos® 126 de la société Ciba-BASF) et voire éventuellement d'autres stabilisants comme un HALS, ce qui signifie Hindered Amine Light Stabiliser ou stabilisant lumière de type amine encombrée (par exemple le Tinuvin® 770 de la société Ciba-BASF), un anti-UV (par exemple le Tinuvin® 312 de la société Ciba), un stabilisant à base de phosphore. On peut également utiliser des antioxydants de type amine tel le Naugard® 445 de la société Crompton ou encore des stabilisants polyfonctionnels tel le Nylostab S-EED® de la société Clariant.

Ce stabilisant peut également être un stabilisant minéral, tel qu'un stabilisant à base de cuivre. A titre d'exemple de tels stabilisants minéraux, on peut citer les halogénures et les acétates de cuivre. Accessoirement, on peut considérer éventuellement d'autres métaux tel l'argent, mais ceux-ci sont connus pour être moins efficaces. Ces composés à base de cuivre sont typiquement associés à des halogénures de métaux alcalins, en particulier le potassium.

De préférence, les colorants sont présents en une proportion de 0 à 1,5%, notamment de 0,5 à 1% en poids par rapport au poids total de la composition. De préférence, les stabilisants sont présents en une proportion de 0 à 2%, notamment de 0,5 à 1% en poids par rapport au poids total de la composition.

Avantageusement, la composition de l'invention est dépourvue de plastifiant et notamment de BBSA.

Dans un mode de réalisation, la composition de l'invention est dépourvue d'additifs.

La Demanderesse a donc trouvé de manière inattendue qu'un copolyamide constitué d'au moins deux polyamides, dont l'un au moins est un polyamide à longue chaîne, et comprenant des motifs polyéthers, notamment hydrophobes, permettait d'obtenir une composition dont la Tf est comprise d'environ 90 à environ 150°C, en particulier d'environ 100°C à environ 125°C et le module de flexion est inférieur à 100 MPa et permettant de fabriquer des adhésifs thermosensibles qui possèdent de très bonnes propriétés de résistance au lavage, de mise en œuvre, de résistance et flexibilité dans le froid, qui ne jaunissent pas avec le temps, comparés aux produits de l'art antérieur et notamment aux TPU, et permettant ainsi la fabrication de textiles sans coutures, notamment bas, collants ou vêtements, plus agréables à porter avec un esthétisme amélioré par rapport aux mêmes produits avec couture.

Avantageusement, le module de flexion de la composition de l'invention est compris d'environ 10 à environ 80, en particulier d'environ 50 à 80 MPa, notamment le module de flexion est égal à environ 80 MPa, en particulier il est égal à 50 MPa.

Avantageusement, la composition de l'invention présente aussi un indice de fluidité à chaud en volume (MVR) compris d'environ 5 à 200 cm$^3$/10', préférentiellement d'environ 10 à environ 100 cm$^3$/10', notamment d'environ 15 à environ 50 cm$^3$/10', en particulier d'environ 20 cm$^3$/10', à 275°C sous une charge de 2,16 Kg tel que déterminé selon la norme ISO 1133-2 (2011). densité de la composition de l'invention est d'environ 1,04 telle que déterminée selon la norme ISO 1183-1 (2012).

La Demanderesse a également trouvé de façon surprenante que la résistance au lavage était procurée par une proportion de motif répétitif aliphatique à longue chaîne en C10 ou plus dans le copolyamide la plus importante possible.

Le copolyamide employé dans les compositions de l'invention est le 6/12/PTMG, en particulier avec une masse moléculaire de 1000/1000 pour les motifs amides et les motifs polyéthers respectivement.

La proportion en poids de chaque constituant du motif amide 6/12 du copolyamide est de 25/75 ou 30/70.

Selon un autre aspect, l'invention concerne un adhésif thermosensible du type HMA (ou hot melt adhesives) constitué d'une composition de l'invention telle que définie ci-dessus.

Les HMA sont des adhésifs thermoplastiques qui sont constitués pour être fondus par chauffage et qui lorsqu'ils sont appliqués sur deux parties d'un textile permettent, après refroidissement, un collage bord à bord des deux parties, évitant ainsi une couture pour relier les deux parties. Avantageusement, l'adhésif thermosensible tel que défini ci-dessus, est choisi parmi, en particulier, un voile, un film, des granulés, un filament, une grille, une poudre ou une suspension.

L'épaisseur de l'adhésif, hormis le filament, les granulés, la poudre ou la suspension selon l'invention est comprise de 5 à 200 μm (équivalent à 5 à 200 g/m$^2$ qui correspond à une autre unité de mesure), en particulier de 5 à 100 μm en fonction du type d'adhésif utilisé, par exemple l'épaisseur d'un voile est comprise de 5 à 30 μm, l'épaisseur d'un film est comprise de 20 à 100 μm, l'épaisseur d'une grille est comprise de 10 à 50 μm.

S'agissant des filaments, il n'existe pas de grammage mais un poids pour 1 km de fil.

S'agissant de la poudre, 5 types de poudres peuvent être utilisées, notamment choisis parmi :

- de plus de 0 à 80 microns
- de plus de 0 120 microns
- de 80 à 180 microns
- de 80 à 200 microns
- de 200 à 500 microns

S'agissant de la suspension, la poudre ci-dessus est mise en suspension, notamment dans de l'eau en particulier à une concentration de 40% à 50%.

Avantageusement, ledit adhésif tel que défini ci-dessus, notamment sous forme de film, présente une épaisseur comprise de 20 à 55 μm et une adhésion (ou adhérence) à un textile, notamment du coton, du lycra®, du polyamide ou du polyester supérieure à 3 N/cm, en particulier comprise de 3 à 15 N/cm telle que déterminée par le test de pelage en T à 100 mm/min.

Le test de pelage en T est basé sur l'utilisation d'assemblages collés flexible sur flexible tel que décrit dans la norme ISO 11339 :2010.

L'adhésion (ou adhérence) de l'adhésif de l'invention à un textile est fonction de plusieurs paramètres tels que le type de textile, l'épaisseur de l'adhésif et la température de lamination, c'est-à-dire la température à laquelle l'adhésif est fondu pour le collage sur le textile, ainsi que de la méthode de mesure.

En particulier, ledit adhésif tel que défini ci-dessus, notamment sous forme de film, en particulier de 6/12/PTMG (1000/1000), présente une adhésion (ou adhérence) d'environ 14 N/cm à du coton (mélange coton/polyester : 90/10) pour une épaisseur d'environ 30 μm avec une température de lamination de 120°C et une adhésion (ou adhérence) d'environ 12 N/cm à du lycra® pour une épaisseur d'environ 30 μm avec une température de lamination de 120°C.

Notamment, ledit adhésif tel que défini ci-dessus, notamment sous forme de film, en particulier de 6/12/PTMG (1000/1000), présente une adhésion (ou adhérence) d'environ 11 à environ 22 N/cm à du coton (mélange coton/polyester : 90/10) pour une épaisseur d'environ 60 μm avec une température de lamination comprise de 140°C à 180°C.

Avantageusement, le rapport de l'adhésion (ou adhérence), notamment d'un adhésif tel que défini ci-dessus sous forme de film de 60 μm, en particulier de 6/12/PTMG (1000/1000), sur l'adhésion (ou adhérence) notamment d'un film de TPU de même épaisseur, à du coton (mélange coton/polyester : 90/10) est compris de 4 à 8 pour une température de lamination comprise de 140 à 160°C.

Avantageusement, ledit adhésif tel que défini ci-dessus, notamment sous forme de film, en particulier de 6/12/PTMG (1000/1000), présente une épaisseur comprise de 55 à 90 μm et une adhésion (ou adhérence) à un textile, notamment en coton et lycra®, supérieure à 5 N/cm, en particulier comprise de 5 à 16 N/cm telle que déterminée par le test de pelage en T à 100 mm/min.

Avantageusement, la dite adhésion (ou adhérence) est déterminée à une température de lamination de l'adhésif thermosensible tel que défini ci-dessus, notamment sous forme de film, comprise de 120 à 180°C, en particulier de 140 à 160°C.

Ledit adhésif thermosensible tel que défini ci-dessus, lorsqu'il est sous forme de film peut être constitué d'une seule couche ou sous forme empilée, c'est-à-dire comprenant au moins deux couches.

A titre d'exemple, le dit adhésif sous forme de film d'épaisseur 60 μm peut être un film d'une couche de 60 μm ou 2 couches de 30 μm ou trois couches de 20 μm... soit autant de couches que l'épaisseur du film divisé par l'épaisseur d'une couche.

Avantageusement, ledit adhésif thermosensible tel que défini ci-dessus, présente une perte d'adhésion (ou adhérence) après au moins deux lavages à 40°C d'environ 2% à environ 18%.

La perte d'adhésion (ou adhérence) est notamment mesurée sur un film de 60 μm et du coton (coton/polyester : 90/10).

Le rapport de l'adhésion (ou adhérence) résiduelle (valeur initiale d'adhésion (ou adhérence) moins la perte d'adhésion (ou adhérence)) après au moins deux lavages à 40°C à une température de 140°C d'un adhésif thermosensible, en particulier sous forme de film de 6/12/PTMG (1000/1000) de 60 μm sur l'adhésion (ou adhérence) résiduelle après au moins deux lavages à 40°C à une température de lamination de 140°C d'un TPU de Tm 120°C est d'au moins 1,6.

En particulier, le rapport de l'adhésion (ou adhérence) résiduelle après au moins deux lavages à 40°C à une température de lamination de 160°C d'un adhésif thermosensible, en particulier sous forme de film de 6/12/PTMG (1000/1000) de 60 μm sur l'adhésion (ou adhérence) résiduelle après au moins deux lavages à 40°C à une température de lamination de 160°C d'un TPU de Tm 150°C est d'au moins 1,9.

Avantageusement, ledit adhésif thermosensible tel que défini ci-dessus, présente une perte d'adhésion (ou adhérence) après au moins deux lavages à 60°C d'environ 2% à environ 30%.

La perte d'adhésion (ou adhérence) est notamment mesurée sur un film de 30 μm ou 60 μm et du coton (coton/polyester : 90/10) ou du lycra®.

Le rapport de l'adhésion (ou adhérence) résiduelle après au moins deux lavages à 60°C à une température de 120°C d'un adhésif thermosensible, en particulier sous forme de film de 6/12/PTMG (1000/1000) de 30 μm sur la l'adhésion (ou adhérence) résiduelle après au moins deux lavages à 60°C à une température de lamination de 120°C d'un TPU de Tm 100°C est d'au moins 5,3.

En particulier, le rapport de l'adhésion (ou adhérence) résiduelle après au moins deux lavages à 60°C à une température de lamination de 160°C d'un adhésif thermosensible, en particulier sous forme de film de 6/12/PTMG (1000/1000) de 60 μm sur l'adhésion (ou adhérence) résiduelle après au moins deux lavages à 60°C à une température de lamination de 160°C d'un TPU de Tm 150°C est d'au moins 3.

Avantageusement, ledit adhésif thermosensible tel que défini ci-dessus, présente des propriétés de stabilité de couleur et de mise en œuvre améliorées. L'expression « stabilité de couleur » signifie que le jaunissement est moindre après un traitement thermique ou UV.

Lesdites propriétés sont améliorées notamment par rapport à un adhésif en TPU.

Selon un autre aspect, la présente invention concerne l'utilisation d'une composition telle que définie ci-dessus, pour la fabrication d'un adhésif thermosensible, en particulier un voile, un film, des granulés, un filament, une grille, une poudre ou une suspension.

Avantageusement, l'adhésif thermosensible tel que défini ci-dessus, est utilisé dans l'industrie textile, notamment pour la fabrication d'article sans couture tels que des bas, des collants ou des vêtements de sport, notamment de sport d'hiver.

**Description des figures**

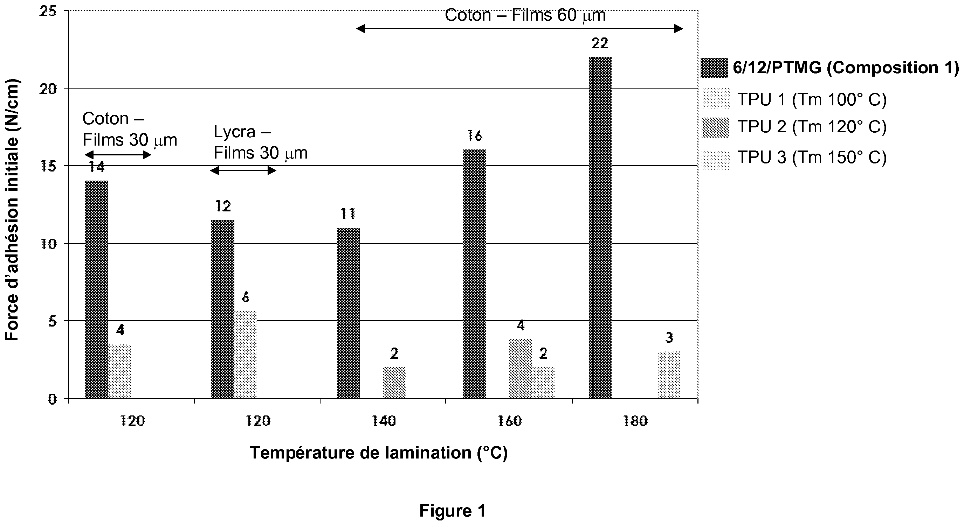

La **figure 1** présente la force d'adhésion (ou adhérence) initiale en N/cm en fonction de la température de lamination, de films de 30 μm ou 60 μm de TPU (1 : Tm = 100°C, 2 : Tm = 120°C, 3 : Tm = 150°C) ou de l'Invention (6/12/PTMG (1000/1000, PM motifs amides et motifs polyéthers respectivement): composition 1, Tm = 110°C) laminés sur du coton (coton 90%, polyester :10%) ou du lycra® à différentes températures.

De gauche à droite :

Température de lamination = 120°C: 14 N/cm : 6/12/PTMG et 4 N/cm: TPU1 (films de 30μm sur coton);
Température de lamination = 120°C: 12 N/cm : 6/12/PTMG et 6 N/cm: TPU1 (films de 30μm sur lycra®);
Température de lamination = 140°C: 11 N/cm : 6/12/PTMG et 2 N/cm: TPU2 (films de 60μm sur coton);
Température de lamination = 160°C : 16 N/cm : 6/12/PTMG, 4 N/cm : TPU2 et 2 N/cm : TPU3 (films de 60μm sur coton);
Température de lamination = 180°C : 22 N/cm : 6/12/PTMG et 3 N/cm : TPU3 (films de 60μm sur coton).

Quelle que soit l'épaisseur du film, le tissu utilisé et la température de lamination, l'adhésion (ou adhérence) des films de l'invention est très nettement supérieure à celle des trois TPU utilisés.

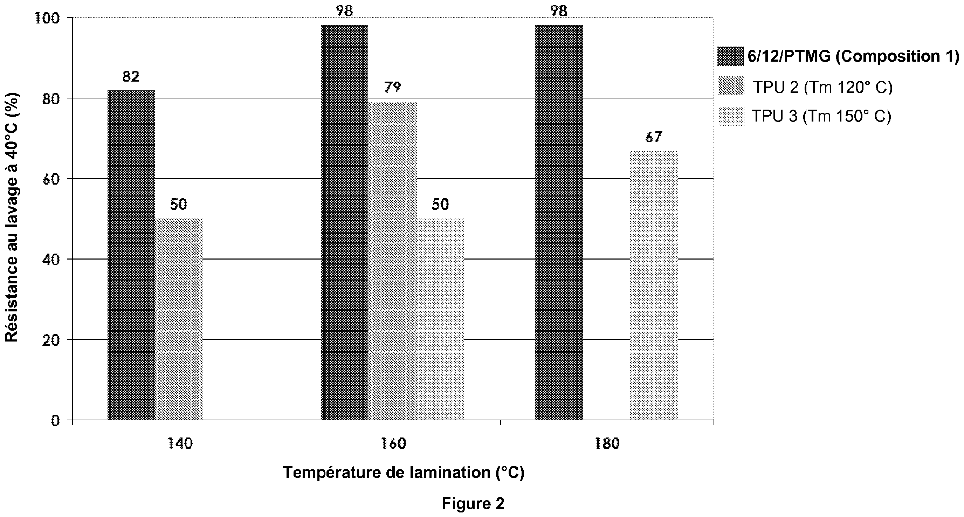

La **figure 2** présente la résistance au lavage à 40°C de films de 60 μm de TPU (2 : Tm = 120°C, 3 : Tm = 150°C) ou de l'Invention (6/12/PTMG (1000/1000 PM motifs amides et motifs polyéthers respectivement) : composition 1, Tm = 110°C) sur du coton (coton: 90%, polyester: 10%) en fonction de la température de lamination.

De gauche à droite :

Température de lamination = 140°C : 82% : 6/12/PTMG et 50% : TPU2 ;
Température de lamination = 160°C : 98% : 6/12/PTMG, 79% : TPU2 et 50% TPU3;
Température de lamination = 180°C : 98% : 6/12/PTMG et 67% : TPU3.

La résistance au lavage à 40°C des films de l'invention est très nettement supérieure à celle des TPU quelle que soit la température de lamination.

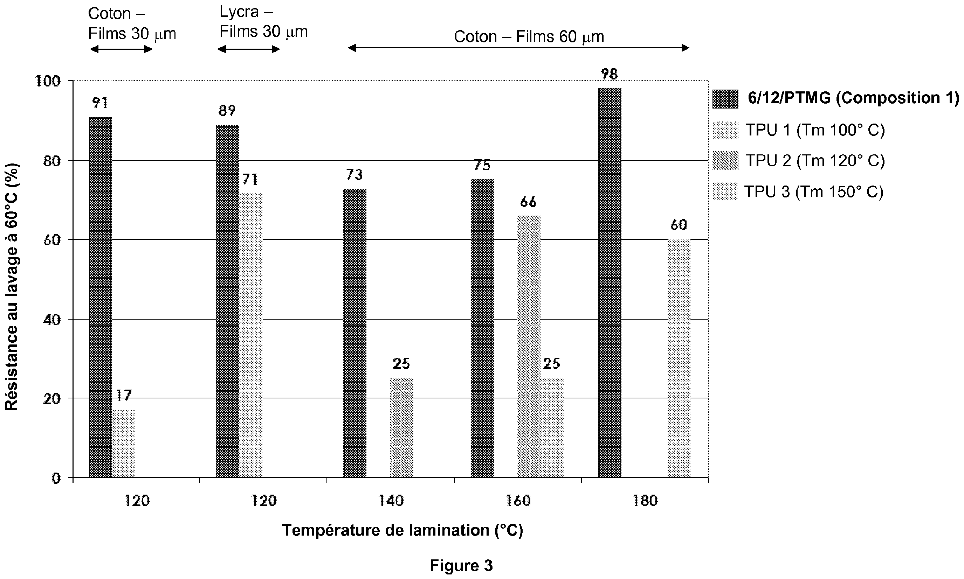

La **figure 3** présente la résistance au lavage à 60°C de films de 60 μm de TPU (1 : Tm = 100°C, 2 : Tm = 120°C, 3 : Tm = 150°C) ou de l'Invention (6/12/PTMG (1000/1000, PM motifs amides et motifs polyéthers respectivement) : composition 1, Tm = 110°C) sur du coton (coton : 90%, polyester : 10%) ou du lycra® en fonction de la température de lamination.

Température de lamination = 120°C : 91% : 6/12/PTMG et 17% : TPU1 (films de 30μm sur coton);

Température de lamination = 120°C : 89% : 6/12/PTMG et 71 : TPU1 (films de 30μm sur lycra®);

Température de lamination = 140°C : 73% : 6/12/PTMG et 25% : TPU2 (films de 60μm sur coton);

Température de lamination = 160°C : 75% : 6/12/PTMG, 66% : TPU2 et 25% TPU3 (films de 60μm sur coton);

Température de lamination = 180°C : 98% : 6/12/PTMG et 60% : TPU3 (films de 60μm sur coton).

La résistance au lavage à 60°C des films de l'invention est très nettement supérieure à celle des TPU quelle que soit la température de lamination, le textile utilisé ou l'épaisseur du film.

## Exemples

### Exemple 1 : Compositions de l'invention :

Les compositions sont préparées selon les techniques connues de l'homme du métier.

La température de fusion est mesurée par DSC (differential scanning calorimetry) selon la norme 11357-3 (2013) ou selon DIN 53736, Teil B (visuelle Bestimmung der Schmelztemperatur von teilkristallinen Kunststoffen) optiquement à l'aide d'un banc chauffant et un microscope.

**Composition 1** : 6/12/PTMG (1000/1000, PA6/PA12 (30/70). DSC 1ère chauffe : 114,8°C.

La composition est détaillée dans le tableau I ci-après :

Tableau I

| Matière première | Poids | Unité |
|---|---|---|
| A. sébacique | 4,63 | kg |
| PTMG1000 | 22,46 | kg |
| lactame 6 | 5,40 | kg |
| lactame 12 | 12,60 | kg |
| Eau | 4,00 | kg |
| Anti UV | 225,00 | g |
| Anti oxydant | 135,00 | g |
| Butylate de Zr | 67,50 | g |

**Composition 2** : 6/12/PTMG (1000/1000, PA6/PA12 (25/75)). DSC 1ère chauffe : 124,6°C.

La composition est détaillée dans le tableau II ci-après :

Tableau II

| Matière première | Poids | Unité |
|---|---|---|
| A. sébacique | 4,63 | kg |
| PTMG1000 | 22,46 | kg |
| lactame 6 | 4,50 | kg |
| lactame 12 | 13,50 | kg |
| Eau | 4,00 | kg |

(suite)

| Matière première | Poids | Unité |
|---|---|---|
| Anti-UV) | 225,00 | g |
| Anti-oxydant | 135,00 | g |
| Butylate de Zr | 67,50 | g |

**Composition 3** (de référence) : 6/11/12/PTMG (1000/1000, PA6/PA11/PA12 (20/10/70)). DSC 1$^{ère}$ chauffe : 116,5°C.

La composition est détaillée dans le tableau III ci-après :

Tableau III

| Matière première | Poids | Unité |
|---|---|---|
| A. sébacique | 4,63 | kg |
| PTMG1000 | 22,46 | kg |
| lactame 6 | 3,60 | kg |
| Amino11 | 1,80 | |
| lactame 12 | 12,60 | kg |
| Eau | 4,00 | kg |
| Anti-UV | 225,00 | g |
| Anti-Oxydant | 135,00 | g |
| Butylate de Zr | 67,50 | g |

**Exemple 2 : Test d'adhésion** (ou adhérence) **des compositions de l'invention**

- Machine de lamination: Model HP-450M,MS
  Pression: 1.0 kg/cm2
  temps de collage: 25 sec

- Machine de pelage: Hongda Tensometer
  Test de pelage à 100 mm/min

- Type de HMA
  6/12/PTMG (composition 1)
  3 types différents de TPU aliphatiques ou aromatiques: TPU1 : Tm = 100°C, TPU2 : Tm = 120°C, TPU3 : Tm = 150°C, commercialisés par Bayer sous la marque Desmopan® ou BASF sous la marque Elastollan®.

- Types of textiles:

  Cotton® (coton 90%, polyester 10%)
  Lycra®

Les tests d'adhésion (ou adhérence) sont présentés en figure 1.

**Exemple 3 : résistance au lavage**

Les différents adhésifs thermosensibles sont soumis à deux lavages en machine pendant 1h30 pour chaque lavage puis à un séchage.

Les tests aux lavages sont présentés en figures 2 et 3.

**Comparaison des propriétés d'adhésif thermosensible**

Le tableau IV présente la comparaison des propriétés d'un adhésif thermosensible constitué d'une composition de l'invention (6/12/PTMG : 1000/1000) : composition 1 avec celles de TPU ou d'un copolyamide classique.

Tableau IV

| PROPRIETES | TPU | CoPA classique | Composition 1 |
|---|---|---|---|
| Main souple | ++ | - | + |
| Résistance au lavage | Jusqu'à 40°C | De 40°C à 90°C | Jusqu'à 60°C |
| Jaunissement | - | + | + |
| Mise en œuvre | - | + | + |

- signifie que le produit ne possède pas la propriété considérée.
+ signifie que le produit présente la propriété considérée de manière bonne.
++ signifie que le produit possède la propriété considérée de manière excellente.

La main souple détermine la flexibilité du composé.
La comparaison des propriétés observées montre que seul l'adhésif de l'invention possède les 4 propriétés décrites dans cette figure.
Le tableau V présente la comparaison des propriétés majeures d'adhésifs thermosensible variés.

Tableau V

| PROPRIETES | TPU | CoPA classique | 6/6.12/11/PEG.12 à 25/20/25/30 Composition comparative | 6/12/PTMG (1000/1000) Composition 1 |
|---|---|---|---|---|
| Module à 23°C | 5 | 300 | 200 | 90 |
| Résistance au lavage | Jusqu'à 40°C | De 40°C à 90°C | Jusqu'à 40°C | Jusqu'à 60°C |
| Tf | 80 à 150°C | 80 à 135°C | 100°C | 110°C |

Les TPU possèdent un module adapté mais ne résistent pas au lavage. Par ailleurs, ils sont difficiles à mettre en œuvre pour la préparation de films.
Les CoPA classiques résistent très bien au lavage mais possèdent un module trop élevé pour l'application adhésif thermosensible.
Le 6/6.12/11/PEG.12 résiste peu au lavage et présente par ailleurs un module trop élevé pour l'application adhésif thermosensible.
Seuls les composés de l'Invention de type CoPA/PTMG possèdent à la fois les bonnes valeurs de modules et la résistance au lavage.

**Revendications**

1. Composition comprenant en poids, le total étant égal à 100 % :

- de 98 à 100% d'au moins un copolyamide à motifs amides et à motifs polyéthers, ayant une température de fusion (Tf) comprise de 100°C à 125°C et présentant un module de flexion inférieur à 100 MPa, tel que déterminé selon la norme ISO 178 (2010);

  • lesdits motifs amide étant 6/12, la proportion en poids de chaque constituant du motif amide 6/12 étant de 25/75 ou 30/70 ;
  • lesdits motifs polyéthers étant issus d'au moins un PTMG,

la proportion en poids de motifs polyéthers dans le copolyamide étant de 50%,
- de 0 à 2% d'au moins un additif choisi parmi les stabilisants et les colorants, ou un mélange de ceux-ci.

2. Adhésif thermosensible du type HMA (ou hot melt adhesives) constitué de la composition de l'invention selon la revendication précédente.

3. Adhésif thermosensible selon la revendication 2, choisi parmi un voile, un film, des granulés, un filament, une grille ou une poudre.

4. Adhésif thermosensible selon l'une des revendications 2 ou 3, présentant une perte d'adhérence, mesurée selon le test décrit à l'exemple 2, après au moins deux lavages à 40°C de 2% à 18%.

5. Adhésif thermosensible selon l'une des revendications 2 à 4, présentant une perte d'adhérence, mesurée selon le test décrit à l'exemple 2, après au moins deux lavages à 60°C de 2% à 30%.

6. Utilisation d'une composition telle que définie dans la revendication 1, pour la fabrication d'un adhésif thermosensible, en particulier un voile, un film, des granulés, un filament, une grille, une poudre ou une suspension.

7. Utilisation d'un adhésif thermosensible tel que défini dans l'une des revendications 2 à 5, dans l'industrie textile.


**Patentansprüche**

1. Zusammensetzung, die Folgendes nach Gewicht umfasst, wobei die Summe gleich 100 % ist:

   - 98 bis 100 % mindestens eines Copolyamids mit Amid-Bausteinen und mit Polyetherbausteinen, das eine Schmelztemperatur ($T_f$) im Bereich von 100 °C bis 125 °C hat und ein Biegemodul, bestimmt gemäß der Norm ISO 178 (2010), von weniger als 100 MPa aufweist;

   • wobei die Amid-Bausteine vom Typ 6/12 sind, und der Gewichtsanteil jedes der Bestandteile des 6/12-Amid-Bausteins 25/75 oder 30/70 betragen;
   • wobei die Polyether-Bausteine aus mindestens einem PTMG hervorgehen,

   wobei der Gewichtsanteil an Polyether-Bausteinen in dem Copolyamid 50 % beträgt,
   - 0 bis 2 % mindestens eines Additivs, das aus den Stabilisatoren und den Farbstoffen, oder einer Mischung davon, ausgewählt ist.

2. Wärmeempfindlicher Klebstoff vom Typ HMA (oder Hot Melt Adhesives), welcher aus der Zusammensetzung der Erfindung gemäß dem vorhergehenden Anspruch besteht.

3. Wärmeempfindlicher Klebstoff nach Anspruch 2, wobei dieser aus einer Folie, einer Dünnschicht, einem Granulat, einem Filament, einem Gitter oder einem Pulver ausgewählt ist.

4. Wärmeempfindlicher Klebstoff nach einem der Ansprüche 2 oder 3, wobei dieser einen Verlust an Haftvermögen aufweist, der bei einer Messung gemäß dem Test, wie er im Beispiel 2 beschrieben ist, 2 % bis 18 % nach mindestens zwei Waschgängen bei 40 °C beträgt.

5. Wärmeempfindlicher Klebstoff nach einem der Ansprüche 2 bis 4, wobei dieser einen Verlust an Haftvermögen aufweist, der bei einer Messung gemäß dem Test, wie er im Beispiel 2 beschrieben ist, 2 % bis 30 % nach mindestens zwei Waschgängen bei 60 °C beträgt.

6. Verwendung einer Zusammensetzung gemäß der Begriffsbestimmung im Anspruch 1 zur Herstellung eines wärmeempfindlichen Klebstoffs, insbesondere einer Folie, einer Dünnschicht, eines Granulats, eines Filaments, eines Gitters, eines Pulvers oder einer Suspension.

7. Verwendung eines wärmeempfindlichen Klebstoffs, wie er in einem der Ansprüche 2 bis 5 definiert ist, in der Textilindustrie.

**Claims**

1. Composition comprising, on a weight basis, the total being equal to 100%:

   - from 98% to 100% of at least one copolyamide bearing amide units and polyether units, having a melting point ($T_m$) from 100°C to 125°C, and having a flexural modulus of less than 100 MPa, as determined according to standard ISO 178 (2010);

      • said amide units being 6/12, the weight proportion of each constituent of the 6/12 amide unit being 25/75 or 30/70;
      • said polyether units being derived from at least one PTMG,

   the weight proportion of polyether units in the copolyamide being 50%,
   - from 0 to 2% of at least one additive chosen from stabilizers and dyes, or a mixture thereof.

2. Heat-sensitive adhesive of the HMA (hot-melt adhesive) type consisting of the composition of the invention according to the preceding claim.

3. Heat-sensitive adhesive according to Claim 2, chosen in particular from a web, a film, granules, a filament, a screen or a powder.

4. Heat-sensitive adhesive according to either of Claims 2 and 3, having a loss of adhesion, measured according to the test described in example 2, after at least two washes at 40°C of from 2% to 18%.

5. Heat-sensitive adhesive according to one of Claims 2 to 4, having a loss of adhesion, measured according to the test described in example 2, after at least two washes at 60°C of from 2% to 30%.

6. Use of a composition as defined in Claim 1, for the manufacture of a heat-sensitive adhesive, in particular a web, a film, granules, a filament, a screen, a powder or a suspension.

7. Use of a heat-sensitive adhesive as defined in one of Claims 2 to 5, in the textile industry.

**Figure 1**

EP 3 134 476 B1

Figure 2

Figure 3

**EP 3 134 476 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3377303 A
- FR 9905430
- FR 0503713
- FR 2497518 A1
- US 4459389 A
- EP 0471566 A
- FR 2846332
- EP 1482011 A

**Littérature non-brevet citée dans la description**

- **KIRK-OTHMER.** Cycloaliphatic Amines. *Encyclopaedia of Chemical Technology,* 1992, 386-405